# FASCICULE DE BREVET EUROPEEN

(11) **EP 1 268 158 B1**
(45) Date de publication et mention de la délivrance du brevet: **04.01.2006**
(21) Numéro de dépôt: 01913987.2
(22) Date de dépôt: 12.03.2001
(51) Int. Cl.: B29C 47/90, B29C 47/92, B29C 55/26

(54) **PROCEDE ET LIGNE DE FABRICATION EN CONTINU DE TUBES EN MATIERE PLASTIQUE AVEC ETIRAGE BI-AXIAL**
VERFAHREN UND FERTIGUNGSSTRASSE ZUR KONTINUIERLICHEN HERSTELLUNG VON BIAXIAL-GERECKTEN KUNSTSTOFFROHREN
METHOD AND PRODUCTION LINE FOR THE CONTINUOUS MANUFACTURE OF PLASTIC TUBES WITH BI-AXIAL DRAWING

(30) Priorité: 29.03.2000 FR 0003931
(43) Date de publication de la demande: 02.01.2003
(73) Titulaire: Alphacan, 78170 La Celle-Saint-Cloud (FR)
(72) Inventeur: PREVOTAT, Bernard, F-92430 Marnes la Coquette (FR); DUVAL, Guillaume, F-64240 Urt (FR)
(74) Mandataire: Michardière, Bernard
(86) Numéro de dépôt international: PCT/FR2001/000731
(87) Numéro de publication internationale: WO 2001/072499

(56) Documents cités:
- WO-A-95/25626
- WO-A-97/06940
- WO-A-98/35814
- US-A- 3 772 118

## Description

L'invention est relative à un procédé de fabrication en continu de tubes en matière plastique avec étirage bi-axial, suivant lequel une ébauche est formée par extrusion, puis est soumise à une traction axiale et à une dilatation radiale combinées.

FR-A-2 753 648 concerne un procédé de ce type, notamment pour des tubes de diamètres relativement importants, en particulier pour des diamètres supérieurs à 150 mm. Ce procédé, qui donne satisfaction, est toutefois discontinu. Dans certains cas, notamment pour des diamètres de tubes plus petits, il est souhaitable que le procédé soit continu afin d'améliorer encore la productivité et de réduire le coût de l'investissement par unité produite.

Une fabrication en continu d'un tube avec étirage bi-axial pose problème quant à la réalisation de la dilatation radiale du tube en une zone de la ligne de fabrication. La phase de démarrage du procédé est en outre délicate.

FR-A-2 207 793 divulgue un procédé de fabrication de tubes en matière plastique avec étirage bi-axial, en continu, dans lequel la dilatation radiale est réalisée à l'aide d'un mandrin tronconique. Des moyens de traction du tube sont prévus en aval et en amont de ce mandrin. La grande base du mandrin tronconique est prolongée par un cylindre de même diamètre qui pénètre dans un calibreur. Le diamètre extérieur de la grande base du tronc de cône et du cylindre qui le prolonge déterminent le diamètre interne du tube fini.

WO 95/25626 concerne un procédé de fabrication en continu du même genre que le précédent, avec un mandrin pour la dilatation radiale, le diamètre de la grande base du mandrin déterminant le diamètre intérieur du tube fini. Des moyens de poussée de l'ébauche sont prévus en amont du mandrin, tandis qu'une tireuse est prévue en aval du mandrin.

L'utilisation d'un mandrin simplifie l'opération de démarrage de la ligne, notamment quant à la dilatation radiale. L'ébauche vient épouser la surface extérieure tronconique du mandrin et subit ainsi une dilatation relativement bien contrôlée. Les frottements sont cependant relativement importants.

Le brevet de Roumanie n° 80960 montre un mandrin de diamètre croissant à section en forme de croix dont les branches sont munies à leurs extrémités de roulettes. Un tube en matière plastique subit sur ce mandrin une dilatation radiale, suivie d'une contraction radiale. La forme en croix de la section transversale du mandrin fait que la surface extérieure du mandrin n'est pas continue, ce qui peut engendrer des marques sur le tube et des étirements variables et non contrôlés sur une même circonférence.

WO 90/02644 concerne un procédé dans lequel la dilatation radiale du tube est obtenue par pression hydraulique interne exercée dans une chambre fermée en amont par un premier bouchon correspondant au diamètre interne de l'ébauche et, en aval d'un calibreur, par un autre bouchon gonflable sous l'effet d'une pression. Ce bouchon non gonflé permet de démarrer la ligne en diamètre initial puis, par gonflage, d'atteindre le diamètre interne nominal du tube fini.

WO 97/06940 utilise également un bouchon aval gonflable et prévoit un contrôle de l'expansion du tube en réponse à divers paramètres qui indiquent, directement ou indirectement, une variation de la vitesse relative à laquelle la matière est fournie à la zone d'expansion et évacuée de cette zone. La dilatation est réalisée par pression hydraulique dans une chambre qui est fermée par le bouchon gonflable et un bouchon amont classique.

L'utilisation d'un bouchon gonflable au contact d'un tube en matière plastique à température relativement élevée pose des problèmes quant au choix de la matière de ce bouchon. Il faut en effet que la matière présente une élasticité suffisante pour permettre le gonflage du bouchon, tout en étant résistante à la température et au frottement imposés par le tube en matière plastique. En outre, pour la réalisation d'une étanchéité satisfaisante sans entraîner un frottement trop élevé du bouchon contre la surface interne du tube, le réglage de la pression interne du bouchon gonflable est difficile.

Un premier objet de l'invention est, surtout, de fournir un procédé de fabrication en continu de tubes en matière plastique avec étirage bi-axial qui permette un démarrage simple en évitant les problèmes posés par un bouchon gonflable, et qui permette de réduire les frottements auxquels le tube est soumis en régime permanent de fabrication.

Pour atteindre ce but, selon une première disposition de l'invention le procédé de fabrication en continu de tubes en matière plastique avec étirage bi-axial consiste à réaliser une ébauche par extrusion, à amener cette ébauche à température d'orientation moléculaire, à faire passer cette ébauche autour d'un mandrin de dilatation radiale, à assurer un calibrage et un refroidissement, tout en soumettant l'ébauche à une traction axiale, et est caractérisé par le fait que :
- lors du démarrage de la ligne, le mandrin n'est pas encore installé, et une ébauche traverse toute la ligne ;
- le mandrin est ensuite mis en place et une chambre fermée en amont et en aval du mandrin est réalisée à l'aide d'au moins un bouchon amont et au moins un bouchon aval qui comprend au moins un disque en une matière suffisamment souple pour pouvoir fléchir et se redresser pour assurer l'étanchéité, l'introduction du bouchon aval d'étanchéité de diamètre supérieur au bouchon amont étant assurée grâce à la dilatation sur le mandrin, ce qui permet de réaliser la chambre fermée en amont et en aval du mandrin,
- la dilatation radiale réalisée sur le mandrin est partielle de sorte que le diamètre interne de l'ébauche, lorsqu'elle quitte le mandrin, est inférieur au diamètre interne nominal du tube fini,
- et on réalise une dilatation radiale complémentaire de l'ébauche, jusqu'à son diamètre nominal, par pression interne de fluide,

l'ensemble étant tel qu'en régime permanent de fonctionnement la surface interne de l'ébauche n'est plus en contact avec le mandrin.

De préférence, le diamètre de la grande base du mandrin est inférieur d'au moins 10% au diamètre nominal du tube fini.

Chaque bouchon peut être formé par plusieurs disques espacés, parallèles entre eux, réalisés en une matière plastique à faible coefficient de frottement.

Le fluide sous pression pour la dilatation complémentaire de l'ébauche est admis entre les deux bouchons d'étanchéité.

Un deuxième objet de l'invention, en combinaison avec le premier objet, est de fournir un procédé de fabrication en continu de tubes en matière plastique avec étirage bi-axial qui permette d'assurer une élongation axiale de la matière plastique pratiquement constante.

Pour atteindre cet autre but, selon une deuxième disposition de l'invention en combinaison avec la disposition précédente, le procédé de fabrication en continu de tubes en matière plastique avec étirage bi-axial consiste à réaliser une ébauche par extrusion, à amener cette ébauche à température d'orientation moléculaire, à assurer une dilatation radiale de l'ébauche, avec calibrage et refroidissement, tout en soumettant l'ébauche à une traction axiale, et est caractérisé par le fait que l'on détecte la force de frottement exercée sur l'ébauche et le tube, et qu'on agit sur au moins un paramètre de fonctionnement pour maintenir cette force de frottement sensiblement constante.

Une telle régulation permet d'assurer une orientation axiale (élongation axiale) constante, ce qui entraîne une épaisseur et des caractéristiques physiques constantes du tube fini.

La détection de la force de frottement peut être assurée par mesure de la force de traction exercée sur le tube. Le paramètre de fonctionnement sur lequel on agit pour maintenir la force de frottement sensiblement constante peut être constitué par la pression interne dans le tube, et/ou par une dépression régnant autour du tube dans un calibreur. Selon une autre possibilité, la force de frottement est régulée par injection de liquide de lubrification, notamment d'eau, entre le tube et la paroi du calibreur.

On peut combiner la régulation précédente avec une régulation en amont prévue pour maintenir constantes les caractéristiques de l'ébauche.

Pour cela, on mesure les caractéristiques de l'ébauche en particulier épaisseur et diamètre de l'ébauche et, en réponse aux résultats de mesures, on agit sur l'extrudeuse pour maintenir constantes les caractéristiques de l'ébauche.

Selon la première ou la seconde disposition, la traction sur le tube est exercée avantageusement en un seul endroit, en aval d'une zone de calibrage, par au moins une tireuse.

L'invention est également relative à une ligne de fabrication en continu de tubes en matière plastique avec étirage bi-axial, pour la mise en oeuvre de la première disposition de procédé, comportant :
- une extrudeuse équipée classiquement pour la formation d'une ébauche ;
- au moins un bac de mise à température d'orientation moléculaire de l'ébauche ;
- un dispositif de dilatation radiale progressive de l'ébauche comprenant un mandrin d'expansion , maintenu fixe relativement à l'extrudeuse ;
- un calibreur et un dispositif de refroidissement du tube,

la ligne de fabrication étant caractérisée par le fait que le mandrin a un diamètre maximal inférieur au diamètre interne nominal du tube ; qu'un bouchon est situé en amont du mandrin ; qu'au moins un autre bouchon est situé en aval du mandrin pour réaliser une étanchéité suivant le diamètre interne nominal du tube ; et qu'un moyen d'admission de fluide sous pression est prévu en un endroit situé entre les deux bouchons d'étanchéité, pour admettre du fluide sous pression et dilater le tube à son diamètre intérieur nominal.

Dans une telle ligne de fabrication, en régime permanent, le tube n'est plus en contact, par sa paroi interne, avec le mandrin.

Avantageusement, une canalisation coaxiale est fixée à l'extrudeuse et le mandrin est fixé à l'extrémité de cette canalisation laquelle comporte un canal qui débouche radialement par au moins une ouverture, entre les deux bouchons d'étanchéité, pour l'injection de fluide sous pression.

Avantageusement, la partie bi-orientation de la ligne de fabrication comporte des moyens de traction du tube, en particulier une tireuse, en un seul endroit situé en aval du calibreur et du dispositif de refroidissement.

Le bouchon aval peut être situé en aval des bacs de refroidissement et être accroché au mandrin par un élément de liaison flexible, notamment un câble .

En variante, le bouchon aval est situé immédiatement derrière le mandrin, ce qui réduit la taille du volume étanche.

Le mandrin a une forme d'ensemble de révolution, par exemple tronconique, dont la grande base est tournée du côté opposé à l'extrudeuse ; le mandrin est avantageusement muni, sur sa surface, d'organes de roulement répartis angulairement et axialement afin d'éviter de marquer la surface interne du tube et de diminuer les efforts de frottement.

Les organes de roulement sont constitués de préférence par des galets cylindriques ou sphériques montés rotatifs.

Avantageusement, le dernier bac de mise à température et/ou le calibreur sont montés de manière à pouvoir être déplacés l'un par rapport à l'autre en translation axiale, notamment pour modifier leur écartement et faciliter le démarrage de la fabrication.

L'invention est également relative à une ligne de fabrication en continu de tubes en matière plastique avec étirage bi-axial qui, indépendamment des caractéristiques précédentes ou en combinaison avec ces caractéristiques, comporte :
- une extrudeuse équipée classiquement pour la formation d'une ébauche ;
- au moins un bac de mise à température d'orientation moléculaire de l'ébauche ;
- un dispositif de dilatation radiale de l'ébauche, par pression interne de fluide;
- un calibreur et un dispositif de refroidissement du tube,
- des moyens de traction axiale de l'ébauche,

cette ligne de fabrication étant caractérisée par le fait qu'elle comporte des moyens pour détecter la force de frottement exercée sur l'ébauche et le tube, et des moyens pour agir sur au moins un paramètre de fonctionnement de la ligne de fabrication pour maintenir cette force de frottement sensiblement constante.

Avantageusement les moyens de traction sur le tube sont situés en un seul endroit, en aval d'une zone de calibrage, et comprennent au moins une tireuse.

La détection de la force de frottement peut être assurée par des moyens de mesure de la force de traction exercée sur le tube.

Avantageusement des moyens de mesure des caractéristiques de l'ébauche, en particulier épaisseur et diamètre de l'ébauche, sont prévus ainsi que des moyens pour agir sur l'extrudeuse en réponse aux résultats de mesures, pour maintenir constantes les caractéristiques de l'ébauche.

L'invention concerne également un tube en matière plastique avec étirage bi-axial obtenu par le procédé et/ou la ligne de fabrication décrits précédemment.

L'invention consiste, mises à part les dispositions exposées ci-dessus, en un certain nombre d'autres dispositions dont il sera plus explicitement question ci-après à propos d'exemples de réalisation décrits en détail avec référence aux dessins ci-annexés, mais qui ne sont nullement limitatifs.
La figure 1 de ces dessins est une coupe schématique axiale, avec parties en extérieur et parties enlevées, d'une ligne de fabrication selon l'invention, en début de production.
La figure 2 montre schématiquement une partie de la ligne après mise en place du mandrin d'expansion à l'entrée du calibreur.
La figure 3 montre, semblablement à la figure 2, la ligne de fabrication en début d'injection du fluide sous pression.
La figure 4 montre, semblablement à la figure 3, la ligne de fabrication après mise en place d'un bouchon en aval de la tireuse.
La figure 5 montre, semblablement à la figure 4, la ligne de fabrication alors que le régime permanent de production s'est établi.
La figure 6 montre, semblablement à la figure 5, une variante de réalisation.
La figure 7 est une vue en élévation à plus grande échelle du mandrin de dilatation radiale.
La figure 8 est une vue, suivant la ligne VIII-VIII de la figure 7, d'un élément du mandrin.
La figure 9 est une vue de dessus de l'élément de mandrin de la figure 8.
La figure 10, enfin, est une vue en élévation d'un exemple de réalisation de bouchon amont.

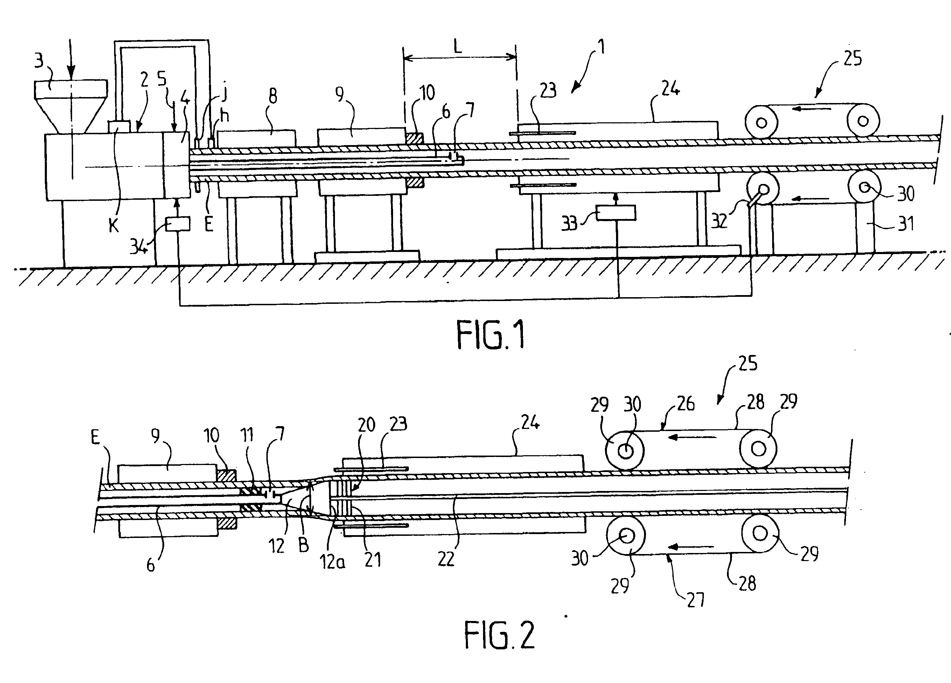

En se reportant aux dessins, notamment à la figure 1, on peut voir une ligne de fabrication 1 mettant en oeuvre le procédé de l'invention. La production se déroule en continu d'amont (sur la gauche de Fig.1) en aval (vers la droite de Fig.1).

La ligne de fabrication comprend une extrudeuse 2 schématiquement représentée, alimentée en matière thermoplastique, notamment en PVC, à partir d'une trémie 3 schématiquement représentée (alimentation en "dry blend"). L'extrudeuse 2 est munie à son extrémité avant, à l'opposé de la trémie 3, d'un outillage 4 d'extrusion d'une ébauche E de tube. L'outillage 4 comporte une ou plusieurs entrées latérales 5 pour admettre et/ou rejeter de l'air sous pression, ou plus généralement un fluide (gaz ou liquide) sous pression. Un conformateur (non représenté) est en outre prévu de manière classique.

Un tube métallique 6 coaxial est fixé à l'extrudeuse 2 et s'étend vers la droite selon Fig. 1. Ce tube 6 comporte, vers son extrémité axiale fermée, au moins une ouverture radiale 7. Lorsque de l'air sous pression est admis par l'entrée 5, cet air est dirigé par des canaux (non représentés) de l'outillage 4 vers le tube 6 pour sortir par l'ouverture 7.

Une ébauche E de tube sort de l'extrudeuse 2 à une température relativement élevée de l'ordre de 150°C ou plus, traverse un ou plusieurs bacs de refroidissement 8, contenant généralement de l'eau, thermorégulés par exemple à 10-20°C pour abaisser sensiblement la température de l'ébauche E. Une tireuse classique (non représentée) est généralement prévue en aval des bacs de refroidissement 8. Cette tireuse , qui agit sur une ébauche encore chaude et donc déformable, n'est pas réellement utilisée pour faire passer des efforts de poussée, mais seulement pour déconnecter les fonctions extrusion et étirage bi-axial en amortissant les perturbations et interactions de l'une sur l'autre.

La partie bi-orientation de l'ébauche débute en aval de la tireuse (non représentée) de la partie extrusion. Cette partie bi-orientation comporte un bac 9 thermorégulé, de refroidissement ou de réchauffement, pour porter l'ébauche E à une température située dans la plage des températures d'orientation moléculaire. Pour le PVC, cette température se situe dans une plage de 90°C à 110°C.

A la sortie du bac 9 est fixée une bague 10 de plaquage externe de l'ébauche sur un bouchon interne amont 11, représenté sur Figs.2 à 6. Ce bouchon interne 11 est situé en amont de l'orifice 7.

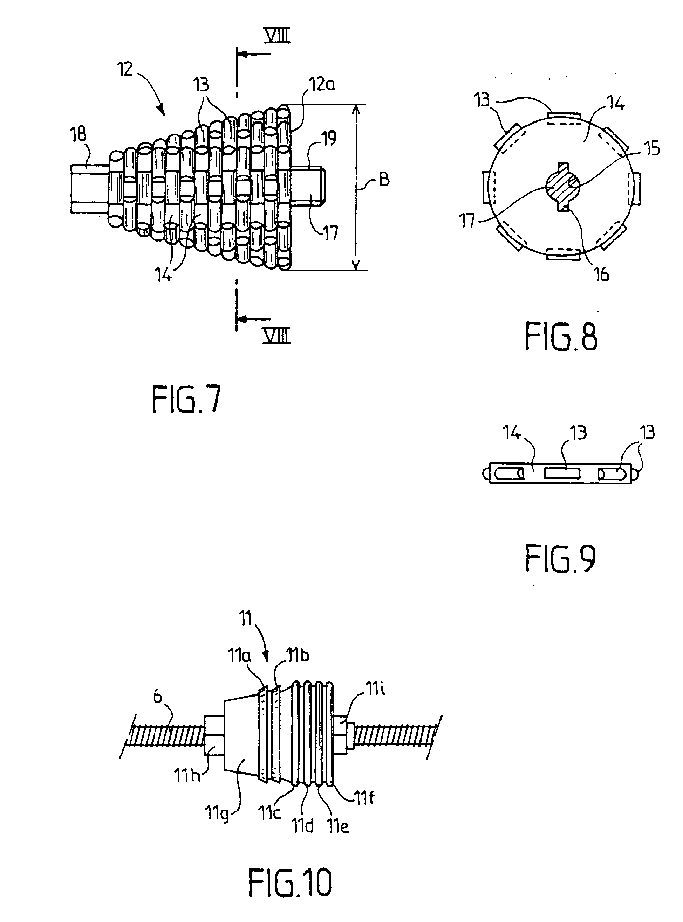

Comme visible sur Fig.10, le bouchon interne 11 peut comprendre, de l'amont vers l'aval, une succession de bagues d'étanchéité, notamment deux bagues 11a, 11b relativement souples, par exemple en matière élastomère, dont la périphérie est formée par une lèvre tronconique dont la grande base est tournée vers l'aval. Plusieurs disques 11c, 11d, 11e, 11f, par exemple en polytétrafluoroéthylène (PTFE), espacés les uns des autres, parallèles entre eux et perpendiculaires à l'axe de l'ébauche, sont prévus en aval de ces bagues 11a, 11b. Le diamètre extérieur des bagues et des disques est au moins égal au diamètre interne de l'ébauche E.

La succession de bagues et de disques 11a-11f forme un empilage maintenu par un noyau métallique 11g bloqué, de manière réglable suivant la direction axiale, par des écrous 11h, 11i vissés sur le tube 6 constitué par une tige filetée creuse.

L'exemple de bouchon 11 décrit en détail ci-dessus n'est pas limitatif, tout moyen d'étanchéité équivalent pouvant convenir.

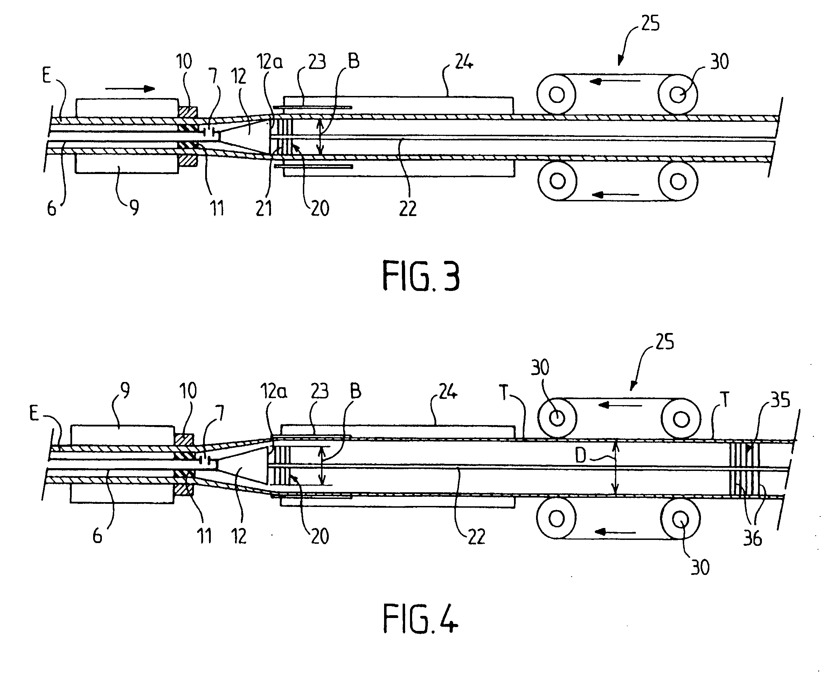

Un mandrin 12 de dilatation radiale, visible sur Fig.2, est fixé, dans des conditions expliquées plus loin, à l'extrémité du tube 6 éloignée de l'extrudeuse 2. Le mandrin 12 a une forme d'ensemble de révolution et est constitué, par exemple, par un tronc de cône. La grande base 12a du mandrin est tournée vers l'aval. Le diamètre B de la grande base 12a est inférieur au diamètre interne nominal D (Fig.4) du tube fini T.

De préférence, le diamètre B est inférieur d'au moins 10% au diamètre D.

Comme illustré sur Fig.7, le mandrin 12 est avantageusement muni sur sa surface de galets cylindriques ou sphériques 13, montés rotatifs sur des axes (non visibles) portés par le mandrin 12. Les galets 13 sont logés en partie dans des alvéoles à la surface du mandrin et font saillie sur cette surface. Les axes de rotation des galets 13 sont disposés dans plusieurs plans parallèles, perpendiculaires à l'axe du mandrin 12. Les galets 13, situés dans un même plan, sont répartis régulièrement autour de l'axe du mandrin. Les galets situés dans des plans successifs sont décalés en quinconce afin d'éviter qu'une génératrice du mandrin 12 soit dépourvue de galet.

Avantageusement, le mandrin 12 est constitué par un empilage tronconique de disques 14 de diamètres croissants d'amont en aval. Chaque disque comporte à sa périphérie des galets 13 régulièrement répartis en couronne. Les disques 14 présentent une ouverture centrale 15 avec une ou plusieurs échancrures 16 pour un montage avec blocage en rotation sur un arbre 17 de section conjuguée. Une butée axiale 18 est prévue sur l'arbre 17 pour retenir le disque de plus petit diamètre. Du côté opposé, l'arbre 17 comporte un filetage 19 permettant de bloquer l'empilage de disques 14 à l'aide d'un écrou en prise avec ce filetage.

Le mandrin 12 peut ainsi être ajusté à différents diamètres internes d'ébauche en ajoutant ou en retirant des disques 14 de diamètres appropriés.

Les galets rotatifs 13 cylindriques ou sphériques permettent de réduire considérablement le frottement de l'ébauche contre le mandrin et d'éviter des marques sur la surface interne du tube.

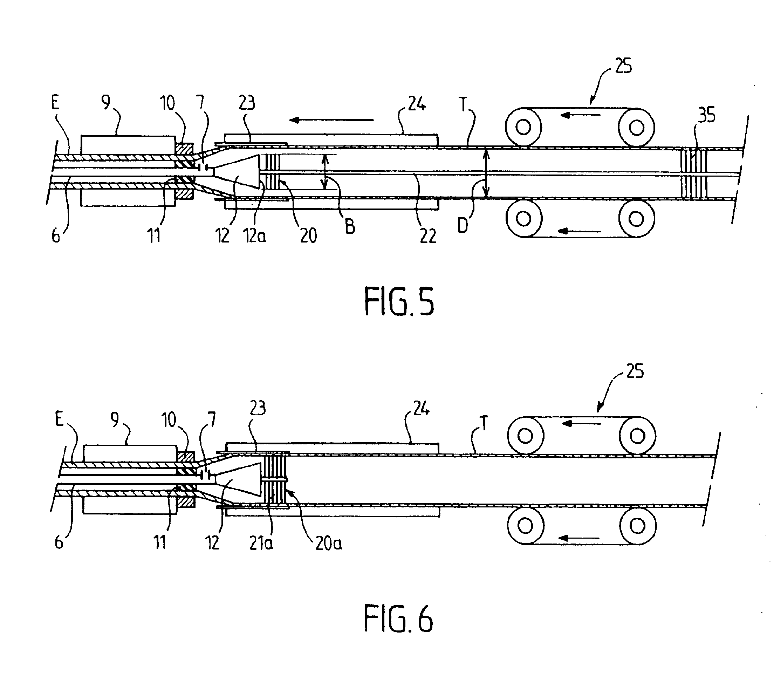

Un bouchon 20 coaxial est fixé au mandrin 12 du côté de la grande base 12a opposé au tube 6. Ce bouchon 20 est formé par exemple par au moins un, et de préférence plusieurs disques 21 espacés, parallèles entre eux, réalisés en une matière plastique à faible coefficient de frottement telle que le polytétrafluoroéthylène (PTFE) ou un thermoplastique élastomère (TPE), renforcé ou non. Les disques 21 sont réalisés en une matière suffisamment souple pour pouvoir fléchir et se redresser pour assurer l'étanchéité. Le bouchon 20 est prévu pour assurer une étanchéité au moins suivant un diamètre égal au diamètre B de la grande base du tronc de cône 12. D'autres explications seront données à ce sujet à propos de la variante de Fig.6.

Un organe de liaison flexible 22, par exemple un câble, est en outre attaché au centre du mandrin 12 du côté opposé au tube 6. Le bouchon 20 peut être installé sur la partie du câble 22 voisine du mandrin 12.

En aval du mandrin 12, l'ébauche entre dans un calibreur 23, schématiquement représenté. Ce calibreur 23 est disposé dans un bac de refroidissement 24 à aspersion d'eau sous vide. La projection d'eau sur la surface externe du tube en matière plastique sortant du calibreur 23 permet de figer la matière. A la sortie du bac 24 le tube T à l'état fini passe dans une tireuse 25 qui exerce l'effort de traction nécessaire sur toute la ligne pour l'entraînement du tube et de l'ébauche. La tireuse 25 est constituée de manière classique par au moins deux chenilles 26,27 prenant appui contre des zones opposées du tube pour l'entraîner de la gauche vers la droite selon Fig.1. Chaque chenille comporte un élément 28 souple formant une boucle sans fin s'enroulant autour de roues 29 dont l'une au moins est motrice, ces roues 29 étant montées rotatives autour d'axes 30 supportés par un bâti 31 fixé au sol.

L'effort de traction exercé par la tireuse 25 est détecté par un capteur 32 (Fig.1), par exemple au niveau du montage d'un axe 30 sur le bâti 31.

La sortie du capteur 32 (Fig.1) est reliée à un bloc 33 permettant de régler le degré de vide dans le bac 24 en réponse au signal de sortie du capteur 32, ainsi qu'à un bloc 34 permettant de régler la pression de l'air délivré par l'orifice 7.

Le bloc 33 peut commander, le cas échéant, une injection d'eau visant à réduire le frottement du tube contre le calibreur 23 si la force mesurée par le capteur 32 est trop importante.

Un capteur j est avantageusement prévu en sortie de l'extrudeuse 2 pour mesurer le diamètre de l'ébauche. Plusieurs autres capteurs h, par exemple à ultrasons, sont répartis à la périphérie de l'ébauche, au voisinage de la sortie de l'extrudeuse 2, pour mesurer l'épaisseur de cette ébauche. Les capteurs j et h sont reliés à un bloc de régulation K propre à agir sur les paramètres de fonctionnement de l'extrudeuse 2 pour maintenir les dimensions de l'ébauche, à la sortie de l'extrudeuse 2, aussi constantes que possible en fonction des valeurs mesurées par les capteurs j et h.

Le bac 24 et le calibreur 23 sont montés réglables suivant la direction axiale , de même que le bac 9. ces éléments sont montés mobiles en translation, par exemple sur des rails fixés au sol (non montrés sur le dessin), avec des moyens de blocage dans une position souhaitée.

La distance L entre la face aval du bac 9 et la face amont du bac 24 est ainsi réglable.

En régime permanent de fonctionnement, un bouchon 35 aval (Fig.4) accroché au câble 22, prend appui de manière étanche contre la surface interne du tube T. Le bouchon 35 peut être constitué par des disques 36 espacés, parallèles entre eux, perpendiculaires à l'axe du tube et réalisés en une matière telle que le PTFE ou un thermoplastique élastomère (TPE), renforcé ou non . Le bouchon 35 est prévu pour réaliser une étanchéité suivant le diamètre interne D du tube fini.

De la description qui précède, il apparaît que la ligne de fabrication est composée de deux parties différentes , avec le minimum d'interactions:
- une partie extrusion de l'ébauche, constituée par une ligne d'extrusion classique (extrudeuse 2, outillage 4, conformateur non représenté, bacs de refroidissement 8, tireuse non représentée);
- une partie bi-orientation de l'ébauche avec bacs de mise en température 9, dispositif de dilatation (12; 6,7,11,20,35,20a), calibreur 23, dispositif de refroidissement 24, tireuse 25 et scie (non représentée).

Ceci étant, le fonctionnement de la ligne de fabrication, mettant en oeuvre le procédé de l'invention, est le suivant.

Le démarrage de la ligne est illustré par les figures 1 à 4.

Selon Fig.1 une ébauche E sort de l'extrudeuse 2, dans un état relativement pâteux, et traverse toute la ligne. Pour assurer cette traversée de la ligne, on peut utiliser un tube auxiliaire de traction qui est introduit d'aval en amont dans la ligne jusqu'au voisinage de la sortie de l'extrudeuse ; on attache, par tout moyen approprié, l'ébauche à ce tube de traction qui, entraîné par la tireuse 25, entraîne lui-même l'ébauche à travers les bacs 8, 9 et 24.

Le mandrin 12 de dilatation radiale n'est pas encore installé (Fig.1) et il n'y a pas injection d'air sous pression par l'entrée 5 et l'orifice de sortie 7. Le bac 9 est reculé vers l'amont tandis que le bac 24 est avancé vers l'aval de sorte que la distance L est maximale.

Le mandrin 12 et le bouchon 20 sont alors mis en place. Pour cela, on réalise une fente suivant une génératrice dans la paroi de l'ébauche dans une zone comprise entre le bac 9 et le bac 24. On écarte les bords de la fente pour mettre en place, en amont de l'orifice 7, le bouchon 11 comme illustré sur Fig.2. Puis on fixe à l'extrémité du tube 6, par exemple par vissage, le mandrin 12 et on introduit le câble 22 suivant toute la longueur de l'ébauche de manière à pouvoir récupérer l'extrémité de ce câble en aval du ou des bacs de refroidissement 24 du tube bi-orienté, éventuellement en coupant par une scie (non représentée) une partie aval de l'ébauche.

L'arrivée de matière se poursuivant, la fente pratiquée dans l'ébauche, pour la mise en place du bouchon 11 et du mandrin 12, se déplace vers l'aval et disparaît. A cet instant l'ébauche subit sa première dilatation au contact du mandrin 12 (Fig.2). Il n'y a toujours pas d'injection d'air sous pression par l'orifice 7.

Lorsque l'ébauche s'est correctement refermée en aval du mandrin 12, on commande un déplacement du bac 9 vers l'aval, comme illustré par une flèche sur Fig.3, pour que la bague 10 vienne se placer autour du bouchon 11 . On assure alors une injection d'air par l'entrée 5 et l'orifice 7, avec montée progressive de la pression de sorte que l'ébauche décolle légèrement du mandrin 12 comme illustré sur Fig.3.

La pression d'air augmentant, l'ébauche s'écarte totalement du mandrin 12 comme illustré sur Fig.4 et vient au contact du calibreur 23. Le diamètre interne du tube atteint alors sa valeur nominale D supérieure au diamètre B de la grande base du mandrin 12.

Le bouchon 35 aval est mis en place à l'extrémité du câble en aval du ou des bacs de refroidissement 24 et assure ainsi un complément d'étanchéité.

En variante, il détermine avec le bouchon aval 20 une chambre dans laquelle règne une pression d'air permettant, après le calibreur, le complément de refroidissement du tube en forme.

Lorsque le régime permanent est établi, on commande le déplacement du bac 24 vers le bac 9, comme illustré par une flèche sur Fig.5, pour réduire l'espace entre ces deux bacs et augmenter la distance entre la surface interne de l'ébauche et le mandrin 12.

De préférence, une traction sur le tube est exercée uniquement en aval du bac 24. La mesure de l'effort de traction réalisée par le capteur 32 (Fig.1) constitue une mesure du frottement de l'ébauche et du tube dans la ligne, en particulier dans le calibreur 23. La régulation effectuée à partir de cette mesure de force par le capteur 32 permet de travailler avec un effort de traction et donc un effort de frottement sensiblement constant ce qui correspond à une orientation axiale (élongation axiale) sensiblement constante pour la matière du tube T.

La force de frottement est maintenue sensiblement constante par le bloc 34 (Fig.1) qui agit sur la pression interne dans l'ébauche et dans le tube, en fonction de la grandeur détectée par le capteur 32. On peut également agir sur le degré de vide dans le bac 24, autour du tube, ou en injectant de l'eau de lubrification entre le tube et la paroi interne du calibreur 23.

Cette régulation est efficace si les caractéristiques dimensionnelles de l'ébauche sont constantes. Pour améliorer la fabrication, on peut prévoir de réguler également l'ébauche à la sortie de l'extrudeuse 2 à l'aide des capteurs j et h (Fig.1) qui, par les valeurs détectées, permettent au bloc K de modifier les conditions de fonctionnement de l'extrudeuse 2 pour maintenir sensiblement constantes les caractéristiques dimensionnelles de l'ébauche.

La figure 6 illustre une variante de réalisation selon laquelle les bouchons aval 20 et 35 de la réalisation précédente ne forment plus qu'un seul bouchon 20a situé immédiatement en aval du mandrin 12. Ce bouchon 20a est de préférence constitué également de disques 21a parallèles, perpendiculaires à l'axe du tube. Les disques doivent présenter une souplesse suffisante pour pouvoir fléchir et assurer dans une première étape l'étanchéité suivant le diamètre B correspondant à la grande base du mandrin 12. Les disques 21a du bouchon 20a, par leur élasticité, doivent pouvoir se redresser et assurer ensuite l'étanchéité suivant le diamètre nominal interne D du tube.

La solution de la figure 6 présente l'avantage d'un volume réduit pour la chambre fermée comprise entre le bouchon amont 11 et le bouchon aval 21a . Il en résulte une moindre inertie à l'égard des variations de pression et des variations de température qui peuvent être commandées. Le volume d'air emmagasiné étant plus réduit, en cas de fuite ou d'incident, les risques sont également diminués.

Dans la description qui précède, le fluide utilisé pour générer la pression interne de l'ébauche est de l'air. Bien entendu, ce fluide pourrait être un liquide, notamment de l'eau chaude.

## Revendications

1. Procédé de fabrication en continu de tubes en matière plastique avec étirage bi - axial, selon lequel on réalise une ébauche (E) par extrusion, on amène cette ébauche à température d'orientation moléculaire, on fait passer cette ébauche autour d'un mandrin (12) de dilatation radiale, on assure un calibrage et un refroidissement, tout en soumettant l'ébauche à une traction axiale, **caractérisé par le fait que** :
- lors du démarrage de la ligne, le mandrin (12) n'est pas encore installé, et une ébauche (E) traverse toute la ligne ;
- le mandrin (12) est ensuite mis en place et une chambre fermée en amont et en aval du mandrin (12) est réalisée à l'aide d'au moins un bouchon amont (11) et au moins un bouchon aval (20,35 ;20a) qui comprend au moins un disque en une matière suffisamment souple pour pouvoir fléchir et se redresser pour assurer l'étanchéité, l'introduction du bouchon aval d'étanchéité de diamètre supérieur au bouchon amont (11) étant assurée grâce à la dilatation initiale sur le mandrin (12), ce qui permet de réaliser la chambre fermée en amont et en aval du mandrin,
- la dilatation radiale réalisée sur le mandrin (12) est partielle de sorte que le diamètre interne (B) de l'ébauche (E), lorsqu'elle quitte le mandrin, est inférieur au diamètre interne nominal (D) du tube fini,
- et on réalise une dilatation radiale complémentaire de l'ébauche, jusqu'à son diamètre nominal, par pression interne de fluide, de sorte qu'en régime permanent de fonctionnement, la surface interne de l'ébauche (E) n'est plus en contact avec le mandrin (2).

2. Procédé de fabrication selon la revendication 1 **caractérisé par le fait que** le diamètre (B) de la grande base (12a) du mandrin est inférieur d'au moins 10% au diamètre nominal (D) du tube fini.

3. Procédé selon la revendication 1 ou 2, **caractérisé par le fait que** chaque bouchon (20, 35) est formé par plusieurs disques espacés, parallèles entre eux, réalisés en une matière plastique à faible coefficient de frottement.

4. Procédé selon la revendication 2 ou 3, **caractérisé par le fait que** le fluide sous pression pour la dilatation complémentaire de l'ébauche est admis entre les deux bouchons d'étanchéité (11; 20, 20a).

5. Procédé selon l'une des revendications 1 à 4, **caractérisé par le fait que** l'on détecte (32) la force de frottement exercée sur l'ébauche et le tube, et qu'on agit (33, 34) sur au moins un paramètre de fonctionnement pour maintenir cette force de frottement sensiblement constante.

6. Procédé selon la revendication 5, **caractérisé par le fait que** la détection de la force de frottement est assurée par mesure (32) de la force de traction exercée sur le tube.

7. Procédé selon la revendication 5 ou 6, **caractérisé par le fait que** le paramètre de fonctionnement sur lequel on agit pour maintenir la force de frottement sensiblement constante est constitué par la pression interne dans le tube, et/ou par une dépression régnant autour du tube dans un calibreur.

8. Procédé selon l'une des revendications 5 à 7, **caractérisé par le fait qu'**on mesure (j,h) les caractéristiques de l'ébauche (E) et, en réponse aux résultats de mesures, on agit sur l'extrudeuse (2) pour maintenir constantes les caractéristiques de l'ébauche.

9. Procédé selon l'une des revendications précédentes, **caractérisé par le fait que** la traction sur le tube est exercée en un seul endroit (25) situé en aval du calibreur et du dispositif de refroidissement.

10. Ligne de fabrication en continu de tubes en matière plastique avec étirage bi-axial comportant :
- une extrudeuse (2) équipée classiquement pour la formation d'une ébauche (E) ;
- au moins un bac (9) de mise à température d'orientation moléculaire de l'ébauche ;
- un dispositif de dilatation radiale progressive de l'ébauche comprenant un mandrin d'expansion (12), maintenu fixe relativement à l'extrudeuse ;
- un calibreur (23) et un dispositif de refroidissement (24) du tube,
**caractérisée par le fait que** le mandrin (12) a un diamètre maximal (B) inférieur au diamètre interne nominal (D) du tube fini ; qu'un bouchon (11) est situé en amont du mandrin (12) ; qu'au moins un autre bouchon (35;20a) est situé en aval du mandrin (12) pour réaliser une étanchéité suivant le diamètre interne nominal (D) du tube ; et qu'un moyen d'admission (7) de fluide sous pression est prévu en un endroit situé entre le bouchon amont (11) et le bouchon aval, pour admettre du fluide sous pression et dilater le tube à son diamètre intérieur nominal.

11. Ligne de fabrication selon la revendication 10, **caractérisée par le fait qu'**en régime permanent, la paroi interne du tube est écartée du mandrin (12).

12. Ligne de fabrication selon la revendication 10 ou 11, **caractérisée par le fait qu'**une canalisation coaxiale (6) est fixée à l'extrudeuse (2) et le mandrin (12) est fixé à l'extrémité de cette canalisation (6) laquelle comporte un canal qui débouche radialement par au moins une ouverture (7), en amont du mandrin (12) et en aval du bouchon amont (11), pour l'injection de fluide sous pression.

13. Ligne de fabrication selon l'une des revendications 10 à 12, **caractérisée par le fait qu'**elle comporte des moyens de traction (25) du tube, en particulier une tireuse, en un seul endroit situé en aval d'un calibreur (23) et du dispositif de refroidissement (24).

14. Ligne de fabrication selon l'une des revendications 10 à 13, **caractérisée par le fait que** le bouchon aval (35) est situé en aval de la tireuse et est accroché au mandrin (12) par un élément de liaison flexible (22), notamment un câble.

15. Ligne de fabrication selon l'une des revendications 10 à 13, **caractérisée par le fait que** le bouchon aval (20a) est situé immédiatement derrière le mandrin (12).

16. Ligne de fabrication selon l'une des revendications 10 à 15, **caractérisée par le fait que** le mandrin (12) a une forme d'ensemble de révolution, notamment tronconique, dont la grande base est tournée du côté opposé à l'extrudeuse, et est muni sur sa surface d'organes de roulement (13) répartis angulairement et axialement afin de limiter le frottement.

17. Ligne de fabrication selon la revendication 16, **caractérisée par le fait que** les organes de roulement sont constitués par des galets cylindriques (13) ou sphériques montés rotatifs.

18. Ligne de fabrication selon l'une des revendications 10 à 17, **caractérisée par le fait que** le bac (9) de mise à température et/ou le calibreur (23) sont montés de manière à pouvoir être déplacés l'un par rapport à l'autre, en translation axiale, notamment pour modifier leur écartement (L).

19. Ligne de fabrication selon l'une des revendications 10 à 18, **caractérisée par le fait qu'**elle comporte des moyens (32) pour détecter la force de frottement exercée sur l'ébauche et le tube, et des moyens (33, 34) pour agir sur au moins un paramètre de fonctionnement de la ligne de fabrication pour maintenir cette force de frottement sensiblement constante.

20. Ligne de fabrication selon la revendication 19, **caractérisée par le fait qu'**elle comporte des moyens de mesure (32) de la force de traction exercée sur le tube.

21. Ligne de fabrication selon l'une des revendications 10 à 20, **caractérisée par le fait qu'**elle comporte des moyens de mesure (j,h) des caractéristiques de l'ébauche, en particulier épaisseur et diamètre de l'ébauche, et des moyens (K) pour agir sur l'extrudeuse en réponse aux résultats de mesures, pour maintenir constantes les caractéristiques de l'ébauche.

## Patentansprüche

1. Verfahren zur kontinuierlichen Herstellung von Kunststoffrohren mit biaxialer Streckung, bei dem durch Extrusion ein Rohteil (E) hergestellt wird, das Rohteil auf eine Molekülorientierungstemperatur gebracht wird, das Rohteil um einen Radialaufweitungsdorn (12) verbracht wird, eine Kalibrierung und eine Abkühlung durchgeführt wird, wobei das Rohteil gleichzeitig einem axialen Zug unterzogen wird, **dadurch gekennzeichnet, daß**
- der Dorn (12) beim Starten der Straße noch nicht installiert ist und ein Rohteil (E) die gesamte Straße durchläuft;
- der Dorn (12) anschließend angebracht wird und eine geschlossene Kammer vor und hinter dem Dorn (12) mit Hilfe mindestens eines stromaufwärtigen Verschlusses (11) und mindestens eines stromabwärtigen Verschlusses (20, 35; 20a) gebildet wird, der mindestens eine Scheibe aus einem Material aufweist, das ausreichend biegsam ist, um sich zu verbiegen und zur Wahrung der Dichtigkeit zurückzustellen, wobei das Einsetzen des stromabwärtigen Dichtungsverschlusses, dessen Durchmesser größer als derjenige des stromaufwärtigen Verschlusses (11) ist, durch die anfängliche Aufweitung auf dem Dorn (12) gewährleistet ist, wodurch die Ausbildung der geschlossenen Kammer vor und hinter dem Dorn möglich ist,
- die auf dem Dorn (12) erfolgte radiale Aufweitung partiell ist, derart, daß der Innendurchmesser (B) des Rohteils (E) beim Verlassen des Dorns kleiner als der nominelle Innendurchmesser (D) des fertigen Rohres ist,
- und eine komplementäre radiale Aufweitung des Rohteils bis zu dessen nominellen Durchmesser durch Fluidinnendruck derart erfolgt, daß die Innenfläche des Rohteils (E) bei Dauerbetrieb nicht länger in Kontakt mit dem Dorn (12) steht.

2. Herstellungsverfahren nach Anspruch 1, **dadurch gekennzeichnet, daß** der Durchmesser (B) der großen Grundfläche (12a) des Dorns um mindestens 10% kleiner als der nominelle Durchmesser (D) des fertigen Rohres ist.

3. Verfahren nach Anspruch 1 oder 2, **dadurch gekennzeichnet, daß** jeder Verschluß (20, 35) durch mehrere zueinander parallele, beabstandete Scheiben gebildet ist, die aus einem Kunststoff mit geringem Reibungskoeffizienten hergestellt sind.

4. Verfahren nach Anspruch 2 oder 3, **dadurch gekennzeichnet, daß** das Druckfluid für die komplementäre Aufweitung des Rohteils zwischen den beiden Dichtungsverschlüssen (11; 20, 20a) eingeleitet wird.

5. Verfahren nach einem der Ansprüche 1 bis 4, **dadurch gekennzeichnet, daß** die auf das Rohteil und das Rohr einwirkende Reibungskraft erfaßt wird (32) und mindestens ein Betriebsparameter verändert wird, um diese Reibungskraft im wesentlichen konstant zu halten.

6. Verfahren nach Anspruch 5, **dadurch gekennzeichnet, daß** das Erfassen der Reibungskraft durch Messen (32) der auf das Rohr ausgeübten Zugkraft erfolgt.

7. Verfahren nach Anspruch 5 oder 6, **dadurch gekennzeichnet, daß** der Betriebsparameter, der verändert wird, um die Reibungskraft im wesentlichen konstant zu halten, der Innendruck im Rohr und/oder ein in einem Kalibrierer um das Rohr herum herrschender Unterdruck ist.

8. Verfahren nach einem der Ansprüche 5 bis 7, **dadurch gekennzeichnet, daß** die Eigenschaften des Rohteils (E) gemessen werden (j, h) und der Extruder (2) in Reaktion auf die Messergebnisse eingestellt wird, um die Eigenschaften des Rohteils konstant zu halten.

9. Verfahren nach einem der vorhergehenden Ansprüche, **dadurch gekennzeichnet, daß** die auf das Rohr wirkende Zugkraft an einer einzigen Stelle (25) ausgeübt wird, die stromabwärts des Kalibrierers und der Abkühlvorrichtung liegt.

10. Straße zur kontinuierlichen Herstellung von Kunststoffrohren mit biaxialer Streckung, mit:
- einem Extruder (2), der auf herkömmliche Weise zur Herstellung eines Rohteils (E) ausgerüstet ist;
- mindestens einem Behälter (9), um das Rohteil (E) auf die Molekülorientierungstemperatur zu bringen;
- einer Vorrichtung zum progressiven radialen Aufweiten des Rohteils, die einen Dehnungsdorn (12) aufweist, der in bezug auf den Extruder feststehend gehalten ist;
- einem Kalibrierer (23) und einer Vorrichtung (24) zum Abkühlen des Rohres;
**dadurch gekennzeichnet, daß** der Dorn (12) einen größten Durchmesser (B) hat, der kleiner als der nominelle Innendurchmesser (D) des fertigen Rohres ist; daß ein Verschluß (11) stromaufwärts des Dorns (12) angeordnet ist; daß mindestens ein anderer Verschluß (35; 20a) stromabwärts des Dorns (12) angeordnet ist, um eine Dichtigkeit entlang dem nominellen Innendurchmesser (D) des Rohres zu erreichen; und daß eine Druckfluideinleiteinrichtung (7) an einer Stelle zwischen dem stromaufwärtigen Verschluß (11) und dem stromabwärtigen Verschluß vorgesehen ist, um Druckfluid einzuleiten und das Rohr auf seinen nominellen Innendurchmesser aufzuweiten.

11. Herstellungsstraße nach Anspruch 10, **dadurch gekennzeichnet, daß** die Innenwand des Rohrs im Dauerbetrieb von dem Dorn (12) beabstandet ist.

12. Herstellungsstraße nach Anspruch 10 oder 11, **dadurch gekennzeichnet, daß** eine koaxiale Kanalisation (6) an dem Extruder (2) angebracht ist und der Dorn (12) an dem Ende der Kanalisation (6) angebracht ist, das einen Kanal aufweist, der radial mit mindestens einer Öffnung stromaufwärts des Dorns (12) und stromabwärts des stromaufwärtigen Verschlusses (11) zum Einspritzen des Druckfluids mündet.

13. Herstellungsstraße nach einem der Ansprüche 10 bis 12, **dadurch gekennzeichnet, daß** sie Einrichtungen (25) zum Ziehen des Rohres aufweist, insbesondere eine Abziehvorrichtung, an einer einzigen Stelle stromabwärts eines Kalibrierers (23) und der Abkühlvorrichtung (24) aufweist.

14. Herstellungsstraße nach einem der Ansprüche 10 bis 13, **dadurch gekennzeichnet, daß** der stromabwärtige Verschluß (35) stromabwärts der Abziehvorrichtung angeordnet und mit dem Dorn (12) durch ein flexibles Verbindungselement (22), insbesondere ein Seil, verbunden ist.

15. Herstellungsstraße nach einem der Ansprüche 10 bis 13, **dadurch gekennzeichnet, daß** der stromabwärtige Verschluß (20a) unmittelbar hinter dem Dorn (12) angeordnet ist.

16. Herstellungsstraße nach einem der Ansprüche 10 bis 15, **dadurch gekennzeichnet, daß** der Dorn (12) die Form einer drehsymmetrischen Einheit, insbesondere Kegelstumpfform, hat, deren große Grundfläche auf der dem Extruder abgewandten Seite liegt, und der Dorn auf seiner Oberfläche mit Rolleinrichtungen (13) versehen ist, die im Winkel und axial verteilt sind, um die Reibung zu begrenzen.

17. Herstellungsstraße nach Anspruch 16, **dadurch gekennzeichnet, daß** die Rolleinrichtungen drehbar angebrachte zylindrische oder sphärische Walzen (13) sind.

18. Herstellungsstraße nach einem der Ansprüche 10 bis 17, **dadurch gekennzeichnet, daß** der Behälter (9) zum Erwärmen und/oder der Kalibrierer (23) derart angebracht sind, daß sie in bezug zueinander in axialer Richtung verschiebbar sind, insbesondere, um ihren gegenseitigen Abstand (L) zu verändern.

19. Herstellungsstraße nach einem der Ansprüche 10 bis 18, **dadurch gekennzeichnet, daß** sie Einrichtungen (32) zum Erfassen der auf das Rohteil und das Rohr aufgebrachten Reibungskraft und Einrichtungen (33, 34) aufweist, die zum Einstellen mindestens eines Betriebsparameters der Herstellungsstraße dienen, um die Reibungskraft im wesentlichen konstant zu halten.

20. Herstellungsstraße nach Anspruch 19, **dadurch gekennzeichnet, daß** sie Einrichtungen (32) zum Messen der auf das Rohr aufgebrachten Zugkraft aufweist.

21. Herstellungsstraße nach einem der Ansprüche 10 bis 20, **dadurch gekennzeichnet, daß** sie Einrichtungen (j, h) zum Messen der Eigenschaften des Rohteils, insbesondere der Dicke und des Durchmessers des Rohteils, und Einrichtungen (K) aufweist, um den Extruder in Abhängigkeit von den Messergebnissen einzustellen, um die Eigenschaften des Rohteils konstant zu halten.

## Claims

1. Process for the continuous manufacture of plastic pipes with biaxial drawing, in which a tube blank (E) is produced by extrusion, this tube blank is taken to the molecular orientation temperature, this tube blank is made to pass around a radial expansion mandrel (12), the tube blank is sized and cooled while subjecting it to an axial pulling force, **characterized in that**:
- from starting up the line, the mandrel (12) has not yet been installed, and a blank (E) passes along the entire line;
- the mandrel (12) is then put into place and a closed chamber upstream and downstream of the mandrel (12) is produced with the aid of at least one upstream plug (11) and at least one downstream plug (20, 35; 20a) which comprises at least one disc made of a material sufficiently flexible for it to be able to flex and to straighten in order to ensure sealing, the downstream sealing plug of greater diameter than the upstream plug (11) being introduced thanks to the initial expansion on the mandrel (12), thereby making it possible to produce the closed chamber upstream and downstream of the mandrel;
- the radial expansion performed on the mandrel (12) is partial so that the inside diameter (B) of the tube blank (E), when it leaves the mandrel, is smaller than the nominal inside diameter (D) of the finished pipe; and
- a further radial expansion of the tube blank, up to its nominal diameter, is performed by internal fluid pressure such that, in the steady operating state, the internal surface of the tube blank (E) is no longer in contact with the mandrel (12).

2. Manufacturing process according to Claim 1, **characterized in that** the diameter (B) of the large base (12a) of the mandrel is at least 10% smaller than the nominal diameter (D) of the finished pipe.

3. Process according to Claim 1 or 2, **characterized in that** each plug (20, 35) is formed by several mutually parallel spaced-apart discs made of a plastic having a low coefficient of friction.

4. Process according to Claim 2 or 3, **characterized in that** the pressurized fluid for the further expansion of the tube blank is admitted between the two sealing plugs (11; 20, 20a).

5. Process according to one of Claims 1 to 4, **characterized in that** the friction force exerted on the tube blank and the pipe is detected (32) and **in that** at least one operating parameter is acted upon (33, 34) in order to keep this friction force approximately constant.

6. Process according to Claim 5, **characterized in that** the friction force is detected by measuring (32) the pulling force exerted on the pipe.

7. Process according to Claim 5 or 6, **characterized in that** the operating parameter acted upon in order to keep the friction force approximately constant consists of the internal pressure in the pipe and/or of a partial vacuum created around the pipe in a sizing device.

8. Process according to one of Claims 5 to 7, **characterized in that** the characteristics of the tube blank (E) are measured (j, h) and, in response to the results of the measurements, the extruder (2) is acted upon in order to keep the characteristics of the tube blank constant.

9. Process according to one of the preceding claims, **characterized in that** the pulling force on the pipe is exerted at a single point (25) lying downstream of the sizing device and of the cooling device.

10. Line for the continuous manufacture of plastic pipes with biaxial drawing, comprising:
- an extruder (2) conventionally equipped for forming a tube blank (E);
- at least one tank (9) for raising the tube blank to the molecular orientation temperature;
- a device for the progressive radial expansion of the tube blank, comprising an expansion mandrel (12) kept stationary relative to the extruder;
- a sizing device (23) and a device (24) for cooling the pipe,
**characterized in that** the mandrel (12) has a maximum diameter (B) smaller than the nominal inside diameter (D) of the finished pipe, **in that** a plug (11) is located upstream of the mandrel (12), **in that** at least one other plug (35; 20a) is located downstream of the mandrel (12), in order to produce a seal depending on the nominal inside diameter (D) of the pipe, and **in that** a pressurized-fluid admission means (7) is provided at a point located between the upstream plug (11) and the downstream plug, in order to admit pressurized fluid and to expand the pipe to its nominal inside diameter.

11. Manufacturing line according to Claim 10, **characterized in that**, in the steady state, the internal wall of the pipe is away from the mandrel (12).

12. Manufacturing line according to Claim 10 or 11, **characterized in that** a coaxial tube (6) is fixed to the extruder (2) and the mandrel (12) is fixed to the end of this tube (6) which has a channel emerging radially via at least one opening (7), upstream of the mandrel (12) and downstream of the upstream plug (11), for injecting pressurized fluid.

13. Manufacturing line according to one of Claims 10 to 12, **characterized in that** it includes means (25) for pulling on the pipe, particularly a haul-off, at a single point located downstream of a sizing device (23) and of the cooling device (24).

14. Manufacturing line according to one of Claims 10 to 13, **characterized in that** the downstream plug (35) is located downstream of the haul-off and is attached to the mandrel (12) by a flexible linking element (22), especially a cable.

15. Manufacturing line according to one of Claims 10 to 13, **characterized in that** the downstream plug (20a) is located immediately behind the mandrel (12).

16. Manufacturing line according to one of Claims 10 to 15, **characterized in that** the mandrel (12) has an axisymmetric, especially frustoconical, overall shape, the large base of which faces the opposite side from the extruder, and is provided on its surface with rolling members (13) distributed angularly and axially so as to reduce the friction.

17. Manufacturing line according to Claim 16, **characterized in that** the rolling members consist of cylindrical or spherical rollers (13) mounted so as to rotate.

18. Manufacturing line according to one of Claims 10 to 17, **characterized in that** the tank (9) for raising the temperature and/or the sizing device (23) are mounted so as to be able to be moved one with respect to the other, in axial translation, especially to change their separation (L).

19. Manufacturing line according to one of Claims 10 to 18, **characterized in that** it includes means (32) for detecting the friction force exerted on the tube blank and the pipe, and means (33, 34) for acting upon at least one operating parameter of the manufacturing line in order to keep this friction force approximately constant.

20. Manufacturing line according to Claim 19, **characterized in that** it includes means (32) for measuring the pulling force exerted on the pipe.

21. Manufacturing line according to one of Claims 10 to 20, **characterized in that** it includes means (j, h) for measuring the characteristics of the tube blank, in particular the thickness and diameter of the tube blank, and means (K) for acting upon the extruder in response to the results of the measurements, in order to keep the characteristics of the tube blank constant.
